Europäisches Patentamt

European Patent Office

Office européen des brevets

(11) Publication number: 0 348 048
A2

# (12) EUROPEAN PATENT APPLICATION

(21) Application number: 89305406.4

(51) Int. Cl.⁴: B65D 85/52 , A01G 9/10

(22) Date of filing: 30.05.89

(30) Priority: 28.05.88 GB 8812761
28.05.88 GB 8812762

(43) Date of publication of application:
27.12.89 Bulletin 89/52

(84) Designated Contracting States:
AT BE DE FR GB NL

(71) Applicant: OTFORD GROUP LIMITED
Chiltern Hunt Belswains Lane
Hemel Hempstead Hertfordshire, HP3
9XD(GB)

(72) Inventor: Opperman, Gordon
25 Lambourne Gardens
Harpenden Hertfordshire AL5 4DQ(GB)

(74) Representative: Bowles, Sharon Margaret et al
BOWLES HORTON Felden House Dower
Mews High Street
Berkhamsted Hertfordshire HP4 2BL(GB)

(54) Transportation and protection package.

(57) A package for transporting horticultural produce comprising a rigid base (2) and transparent lid (3). A frame (5) within the base holds individual plant pots and each pot is provided with a cover (10) for retaining compost in the pot. The covers are also useful for maintaining plant viability in outside locations. The frame and pot covers may co-operate or be integrally made.

FIG.1.

EP 0 348 048 A2

## TRANSPORTATION AND PROTECTION PACKAGE

This invention relates to containers and packaging and especially to containers and packaging for the transportation and protection of plants and horticultural goods.

Many horticultural goods, especially seeds, seedlings and small plants are dispatched in the mail, the usual packaging being a cardboard box and plastic bags around moist items. In general a substantial deterioration and loss of plants is experienced due to handling damage and, in the event of delays, lack of light reaching the plants.

When plants are potted, for example prior to dispatch, it is necessary to prevent the compost in the pot from drying out and this can be a laborious job at storage depots and horticultural centres where there may be very large numbers of potted plants. The problem is particularly acute for small plants and seedlings which are generally in small pots that are more prone to drying out, and since the plants may not have extensive root systems putting them in larger pots does not completely alleviate the problem because the small root system can not reach the more distant parts of the compost and so the plant suffers as soon as the compost around the roots has dried out.

The present invention is directed towards providing a transportation and protection package that in its various aspects prevents or at least minimizes the deterioration and loss of plants during storage and transit and/or may reduce moisture loss from around the plants and channel falling moisture to the proximity of the root system.

Accordingly the invention provides a transportation container for horticultural produce comprising a rigid base, a rigid lid a least part of which is transparent, and means for retaining a plurality of individual plant containers in a predetermined location within the base.

In a modification of the invention there is provided a cover for location around the stem of a plant to cover the compost or soil surrounding the plant in an individual plant container, the cover comprising a lamina having an aperture for the stem of the plant, at least one parting line extending from the rim of the cover to the aperture and in which at least a portion of the lamina slopes downwardly in the direction of the aperture.

A further modification provides a cover for location around the stem of a plant to cover the compost or soil surrounding the plant, the cover comprising a lamina having an aperture for the stem of the plant with at least a portion of the lamina in the vicinity of the aperture sloping downwardly in the direction of the aperture, a parting line extending across the cover in alignment with the aperture and along which the cover separates into separate portions and flexible means supporting the cover portions so that they can be pivoted between a closed configuration with the aperture surrounding the plant stem and an open configuration with the cover portions separated along the partition line.

The invention is now described by way of example with reference to the accompanying drawings in which:

Figure 1 is a perspective view of an embodiment of the invention;

Figure 2 is a cross sectional view of a second embodiment of the invention;

Figure 3 is a perspective view of one embodiment of an individual plant container for use in conjunction with the embodiments of Figures 1 and 2.

Figure 4 is a plan view from above of another embodiment of an individual plant container;

Figure 5 is a side view of the embodiment of Figure 4;

Figure 6 is a perspective view of the embodiment of Figure 4;

Figure 7 is a perspective view of another embodiment of an individual plant container;

Figure 8 is a perspective view of a further embodiment of an individual plant container;

Figure 9 is an illustration of an embodiment without a pot; and

Figure 10 is an illustration of another cover assembly without a pot.

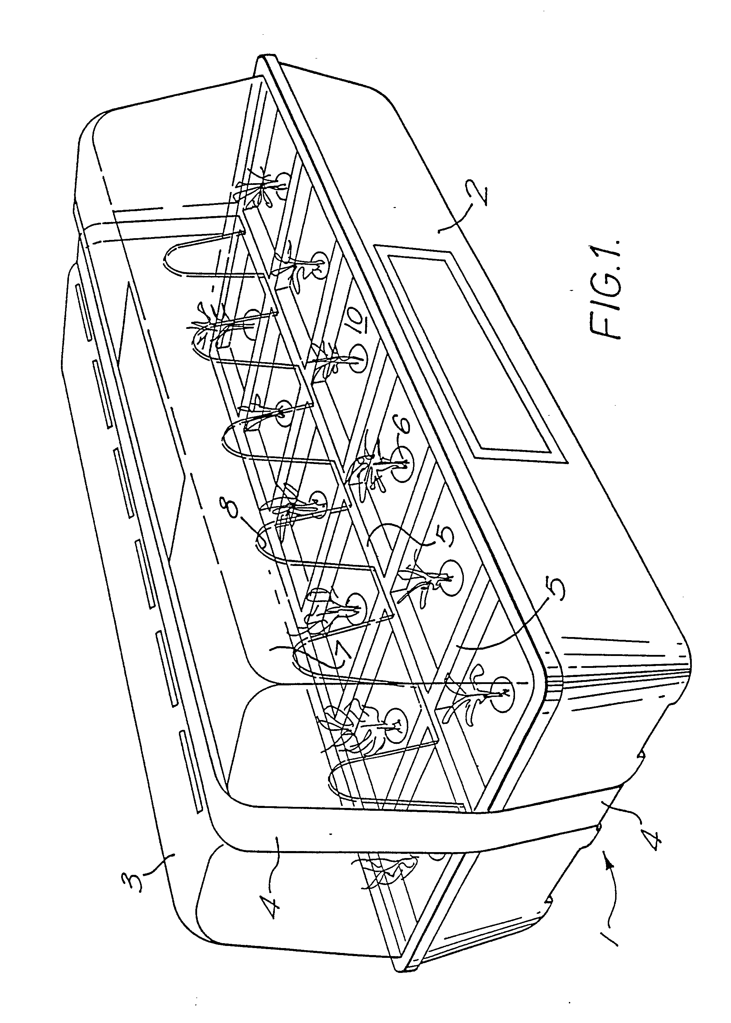

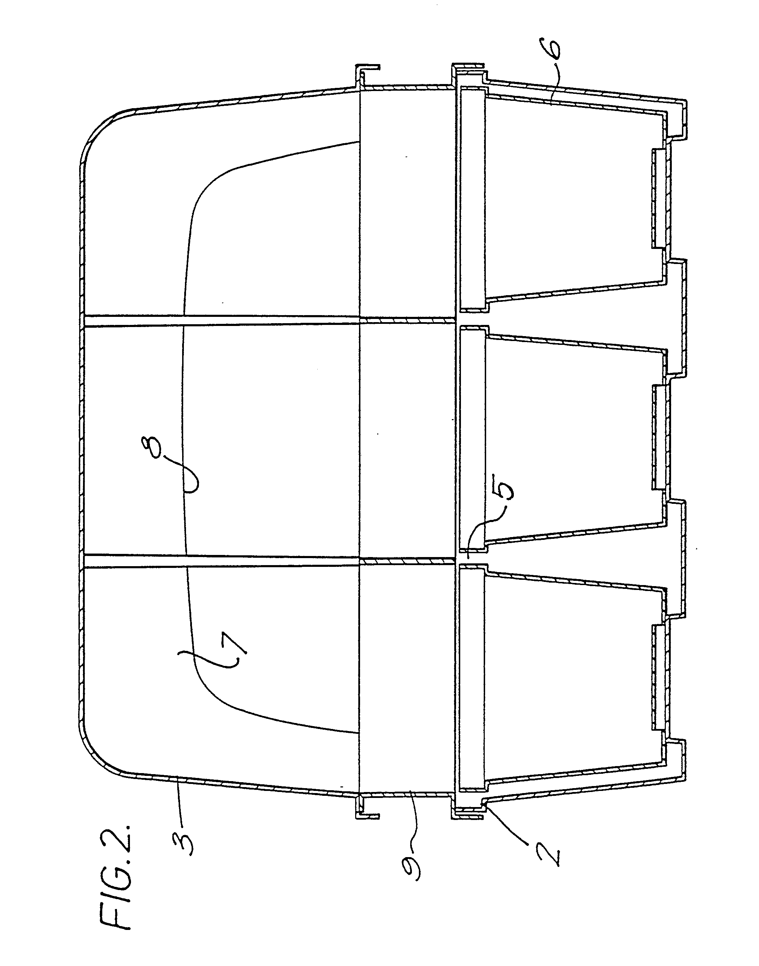

Referring to Figures 1 and 2, a horticultural transportation container 1 comprises a base 2 and a lid 3 which fits over the base. The lid and base are both provided with a recessed channel 4 for a strap that can be secured around the lid and base to hold them together, conveniently the strap may also include a carrying handle. Alternative means for securing the base and lid during transportation may be utilised, such as clasps, interference fitting or adhesive tape. The base and lid may be made of moulded plastics material, for example of polypropylene, and at least the lid is transparent or includes substantial transparent portions. The base and lid may each be subdivided by partitions that are preferably removable. For the embodiment of Figure 1 the base is provided with a support frame 5 for individual plant holders 6: support frame 5 is shown as a single unit, but it may comprise a series of smaller frames so that only a part of the base need be subdivided for plant holders leaving the rest of the space for other items such as bulbs, seeds or larger plants. Alternatively the frame (or frames) 5 may be of different sizes to receive individual plant holders of different sizes. Partitions 7 are provided for the lid which slot into the frame 5 and into one another so that, depending upon the combination of goods to be transported, an appropriate number of partitions may be inserted. The type of partition may also be varied to provide different configurations of or smaller air vents than arches 8 illustrated or compartments may be formed without air vents. In general the partitions 7 provide support or restraint for the foliage of plants and an air passage from compartment to compartment. If bulbs or small individual items are included in the package then smaller air channels than the arches 8 shown are desirable to prevent excess movement of the items from compartment to compartment, for this purpose, for example, a series of small holes may be provided instead of arches. In some instances, for example if substances that could damage the plants are present in the package, it may be desirable to have no air passageway between the compartments for the plants and the compartments for the substances so that the partitions form a barrier in the event of escape of the substances from their immediate packaging. For some applications, for example where foliage is sturdy, partitions 7 may be omitted.

Referring now to Figure 2, a modification of the invention is shown in which a spacer 9 is interposed between the lid and the base. This spacer is used to increase the volume of the container to provide room for tall plants. The individual containers 6 for the plants may be standard square section plastics or even peat pots. A cover is provided for each of the individual containers 6.

The covers may be placed in position on the pots 6 prior to their insertion in the container 1 and operate to control moisture prior to packaging or during bulk transportation and storage. Ventilation to external atmosphere is via vents provided in the container top or sides, and drainage holes are provided in the container base.

Due to the transparent lid or lid portions some light gets to the plants during transportation and also the visibility of the contents tends to promote more careful handling. However even when roughly or randomly handled the container is crush resistant and maintains the plants in a properly spaced arrangement. '

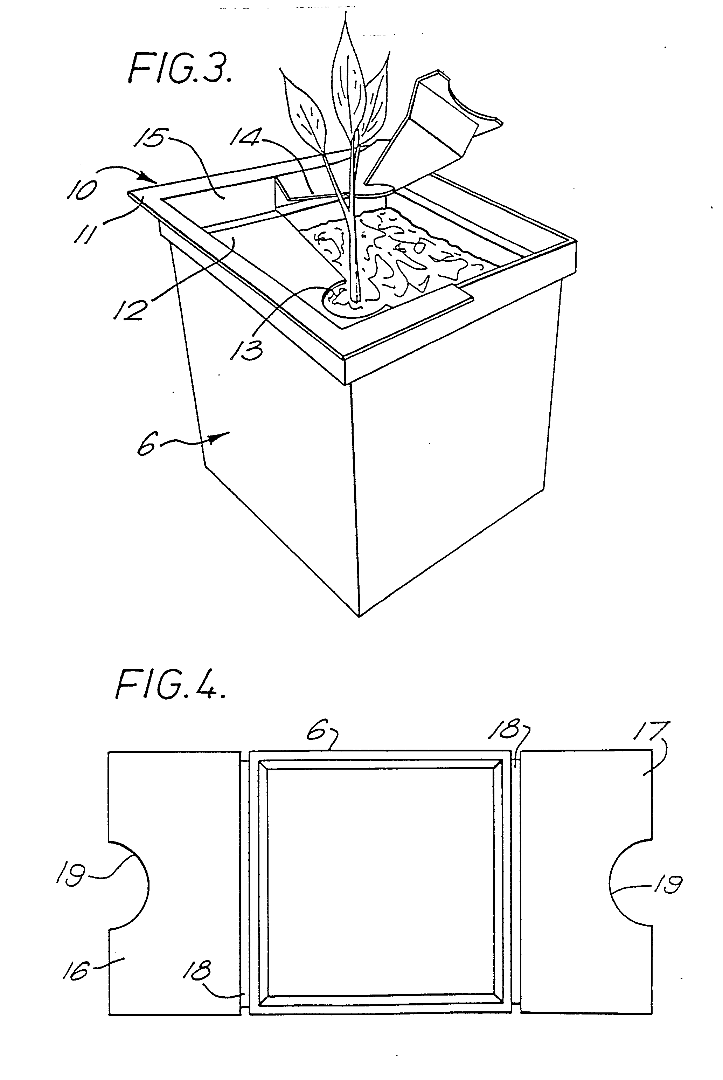

Figure 3 shows a plant that is potted in a square section pot 6 on to which a cover 10 is placed so that the top of the compost is substantially covered and the plant projects through an aperture 13 in the cover 10. The pot 6 may be any type of pot, and of any shape, but square section plastics pots are particularly convenient for use in conjunction with the transportation package shown in Figures 1 and 2. If a pot of different transverse cross section is used, or if the cover 10 is used around plants in a bed or tub, then the shape of the cover 10 may be varied accordingly.

In order to locate the cover around a plant and enable its disengagement, a slit or parting line 14 extends from one edge of the cover to the aperture 13 and the cover is made of a flexible material so that parts of the cover on opposite sides of the slit may be eased apart and passed around the stem of the plant without damage to the foliage of the plant. In some embodiments, and as shown in the drawing, the slit 14 may also extend across the cover on the opposite side of the aperture 13. In this embodiment the rim of the cover is only slit once so that the cover is in a single piece, but covers are envisaged that comprise separate cover portions which fit together around the plant stem, and in this latter instance the cover need not be flexible. A further variation on the slit 14 extending to the aperture 13 is for the slit to be replaced by a slot of sufficient diameter for a plant stem: again this removes the requirement for flexibility. Within the context of this specification 'parting line' includes slits where the confronting edges overlap or have a separation to form a slot. Relative movement of edges of the parting line is not always necessary.

The cover comprises a lamina 12 that has a waterproof (by which is meant to include water repellent and non water absorbent) upper surface and slopes from its outer edge towards the aperture 13, and thus any moisture that falls or collects on the upper surface of the lamina part of the cover will tend to run to the aperture and fall on to the compost in the vicinity of the plant stem. A cover may comprise just this lamina portion and be fitted around the stem of a plant either in a pot or in the ground. When fitted around a plant in a pot the cover may be of a size that substantially matches the pot top area or the cover may be larger than the pot top area and thus be capable of collecting moisture (for example from rain or dew) from a greater area than the pot top and directing this into the pot. Likewise when fitted around a plant in the ground the cover may be of a size larger than the lateral extension of the root system and therefore collect moisture from a greater area that would otherwise be available to the plant. The cover also reduces moisture loss from the compost through evaporation.

When the plants are to be transported or stored in bulk it is generally desirable for the cover to fit neatly over or into the pot top and retention on the pots or other support may be aided by the provision of walls and/or flanges on the cover. In Figure 3 the cover has an upstanding wall 15 and a flange 11, and the walls may be a close fit within a similarly sized pot so that not only does the cover reduce moisture loss from the compost and direct collected moisture to the plant, it can also retain the compost within the pot should the pot be knocked over. A similar engagement with the pot may be achieved for example with a downwardly directed wall that fits over the outside of the pot.

When the cover is used in combination with the transportation package of Figures 1 and 2 the walls 15 fit within a frame within the package and thus serve to retain the pots in position, even upon inversion. A multi-purpose cover may be provided with both a pot-engaging flange and a transportation frame-engaging flange. Instead of the lamina being concave toward the aperture it may be provided with recessed or sloping channels.

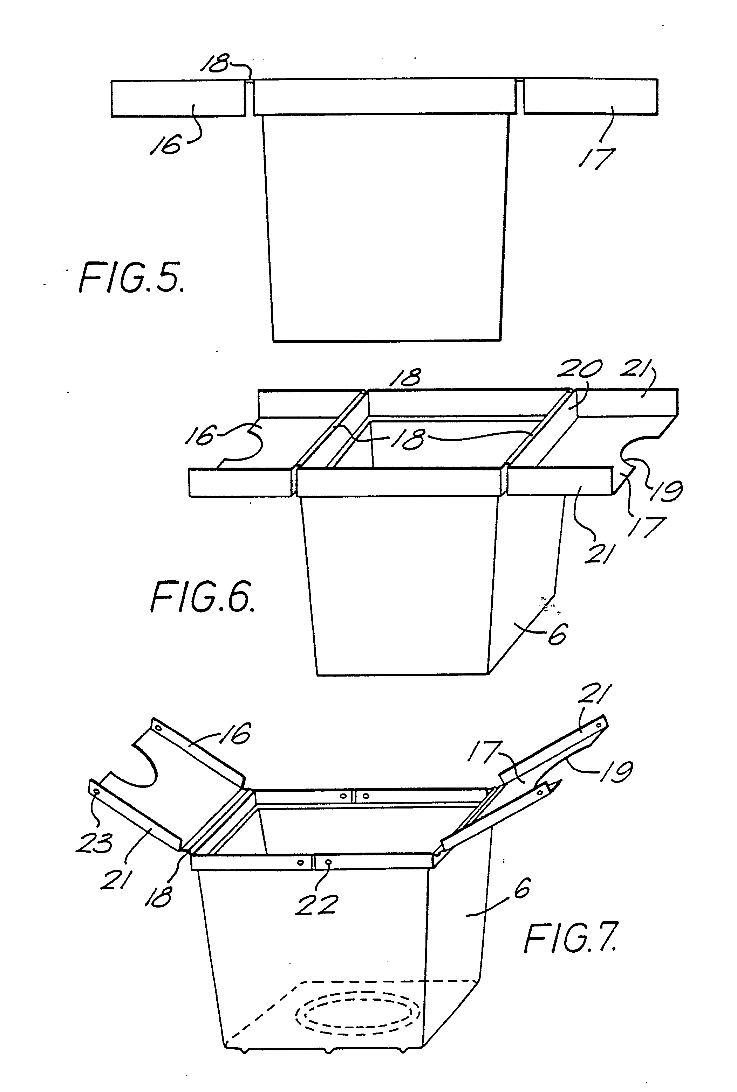

Referring to Figures 4 to 8 of the drawings, a pot 6 is provided with a cover which comprises two separate portions 16, 17 which are connected to the pot 6 by hinge portions 18.

Each of the cover portions 16, 17 has a semicircular cut-out 19 disposed so that when the portions are pivoted about their hinges to lie over the top of the pot the edges of the two cover portions meet and the semicircular cut-outs define a circular aperture for a plant stem. The cut-outs and aperture could of course have other shapes. In the embodiment shown in Figures 4 to 6 the hinges 18 between the pot and the cover portions are located at the edge of a flange 20 extending at right angles to the main surface of the cover so that when the cover is pivoted over the pot the flange 20 and side flanges 21 on the cover meet the upper surface of the pot. This arrangement leaves a small free volume defined beneath the pot cover, which may be advantageous for permitting aeration of the compost around the plant.

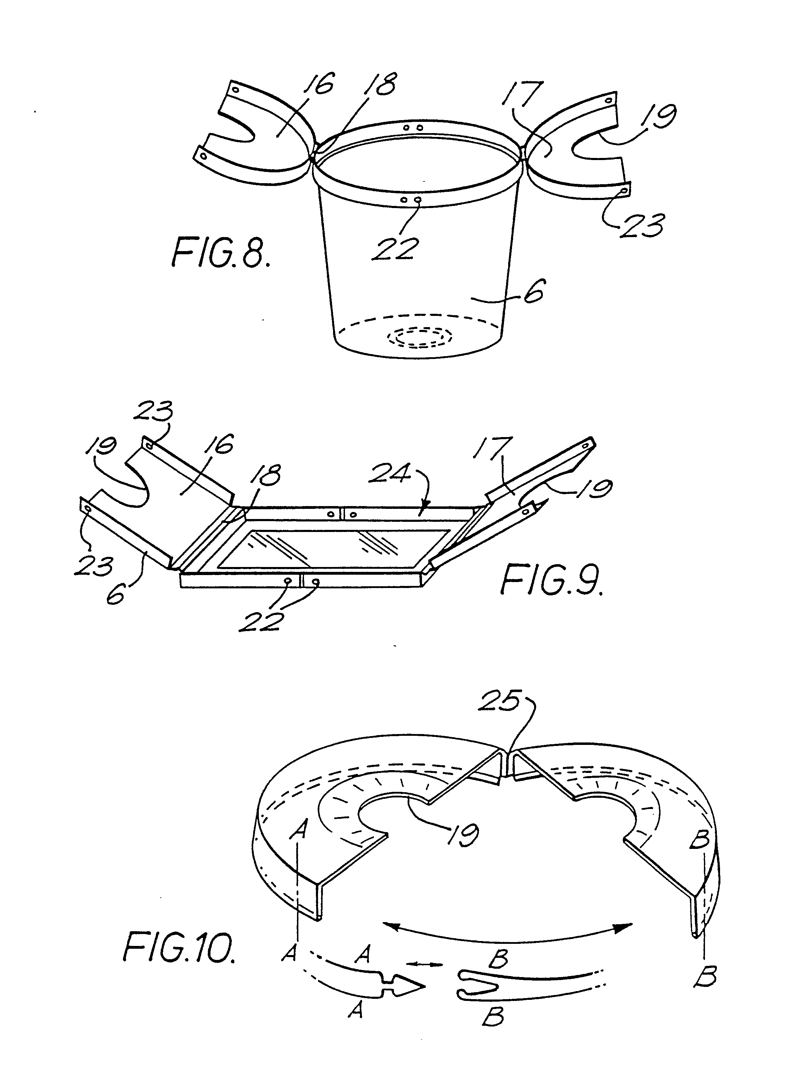

A more closely fitting cover is obtained as shown in Figure 7, by omitting the flange 20 and hinging the main surface of the cover to the edge of the pot rim so that when the cover is pivoted over the pot the main surface of the cover abuts the pot rim and the flanges 21 extend over the edges of the rim. It is also possible to make the cover slightly smaller than the pot rim so that the flanges 21 can be tucked inside the pot. Small ridges or catches 22 may be provided on the pot with co-operative recesses 23 on the cover to retain the cover in the closed position, or alternatively, when the flanges 21 lie within the pot rim the natural resilience of the material may be used to provide a retaining effect. A further modification is for the flanges 21 to be shaped to dig into the compost to aid retention in the closed configuration.

In order to aid channelling of moisture towards the plant (in exterior locations) the surface of the cover is generally dished downwardly (when viewed in the closed position). It is possible to provide covers for pots of different shapes, including rectangular, octagonal or hexagonal, and more than one aperture may be defined for example for an elongate planter with several plants.

It is generally preferred to utilise pot top shapes with a flat side, for example rectangular or hexagonal as this provides a flat edge for the hinge. However, small hinges may be provided and this enables curved pot tops to be provided with a cover, as shown for example in Figure 8.

The pot cover may be provided, as shown in Figures 4 to 8, integrally with a pot, or as a separate unit. When it is provided integrally with the pot, the pots and covers are stackable inside one another with the pot covers in the open position. If the covers are provided separately they may comprise a frame 24 that fits over a pot top with associated hinged wings 16, 17 that form the cover, for example as shown in Figure 9, or an assembly with a vertical hinge 25, for example as shown in Figure 10, may clip around the pot. The frame of the Figure 9 embodiment may be arranged to be a close fit over a pot of a given size and shape, or the frame may be provided with flanges or spikes for insertion into the compost. These flanges may be provided inwardly of the frame rim, or may be provided on the underside (when closed) of the cover portions. The cover shown in Figure 10 may be provided with a wedge and gully locking mechanism, or some other locking mechanism on its outer rim, or it too could have flanges for insertion into the compost in a pot. Vertically hinged arrangements such as that shown in Figure 10 may also be applied to other shapes of tops.

The covers, hinges and associated pots may be made of moulded plastics material, with a thin web of plastics material constituting the hinge. Polypropylene is particularly favoured for applications where the hinges may be repeatedly flexed because a thin web polypropylene hinge is very durable. A polyethylene cover assembly may also be used and be sufficiently durable for applications where the hinge is only occasionally flexed, such as once on potting and again on removal, with possibly one or two pot or cover re-use cycles. Alternatively the pot cover may be made of a compressed fibrous material, including paper for example, which may be impregnated with resin or stiffeners to provide a degree of resistance to water absorption so that falling moisture is channelled to the aperture and thence the plant compost.

It is envisaged that covers consisting of more than two hinged portions may be provided.

A further modification of the pot cover, for use in conjunction with the transportation container is for the covers to be interfitting so that the covers themselves constitute at least a part of the supporting frame 5 or for the frame to be provided with integral pot covers. In this latter instance pot cover sections may be hinged or flexibly connected to the frame rather than to one another. Pots may also be made integrally with the frame and/or covers.

## Claims

1. A transportation container for horticultural produce comprising a rigid base, a rigid lid at least part of which is transparent and means for retaining a plurality of plant containers in a predetermined location within the base.

2. A transportation container according to claim 1 in which the means for retaining comprises a frame adapted for receipt of the containers and the containers are provided with covers and the containers or covers cooperatively engage with the frame.

3. A transportation container according to any preceding claim further comprising partitions within the lid that

4. A cover for location around the stem of a plant to cover the compost or soil surrounding the plant, the cover comprising a lamina having an aperture for the stem of the plant, at least one parting line extending from the rim of the cover to the aperture, and a flange extending from at least part of the rim of the cover, and in which at least a portion of the lamina slopes downwardly in the direction of the aperture.

5. A cover according to claim 4 in which the lamina is concave towards the aperture.

6. A cover according to claim 4 or claim 5 in which the flange constitutes a pot engaging flange.

7. A cover according to any of claims 4 to 6 wherein the parting line extends across the cover in alignment with the aperture and along which the cover separates into separate portions and flexible means supporting the cover portions so that they can be pivoted between a closed configuration with the aperture surrounding the plant stem and an open configuration with the cover portions separated along the parting line.

8. A cover according to any of claims 4 to 7 in which the cover portions are respectively hinged to a supporting frame.

9. A cover according to claim 8 in which the frame comprises part of a pot.

10. A cover according to any of claims 4 to 6 in which the cover further comprises a portion adapted for cooperation with transportation package according to any of claims 1 to 3.

FIG.1.

EP 0 348 048 A2

FIG.2.

EP 0 348 048 A2

FIG.3.

FIG.4.

*FIG.5.*

*FIG.6.*

*FIG.7.*

FIG.8.

FIG.9.

FIG.10.